(19) 

**Europäisches Patentamt**
**European Patent Office**
**Office européen des brevets**

(11) **EP 4 407 706 A1**

(12) **EUROPEAN PATENT APPLICATION**
published in accordance with Art. 153(4) EPC

(43) Date of publication:
**31.07.2024 Bulletin 2024/31**

(21) Application number: **22927587.0**

(22) Date of filing: **09.12.2022**

(51) International Patent Classification (IPC):
**H01M 4/131** (2010.01)     **H01M 4/136** (2010.01)
**H01M 4/505** (2010.01)     **H01M 4/525** (2010.01)

(52) Cooperative Patent Classification (CPC):
**H01M 4/00; H01M 4/131; H01M 4/136;**
**H01M 4/1391; H01M 4/1397; H01M 4/485;**
**H01M 4/505; H01M 4/525; H01M 4/58;**
**H01M 10/00; H01M 10/054;** Y02E 60/10

(86) International application number:
**PCT/CN2022/138078**

(87) International publication number:
**WO 2024/113407 (06.06.2024 Gazette 2024/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.11.2022 CN 202211514774**

(71) Applicant: **Jiangsu Pylon Battery Co., Ltd.**
**Yangzhou City, Jiangsu 211400 (CN)**

(72) Inventors:
• **RUAN, Zewen**
**Yangzhou City, Jiangsu 211400 (CN)**

• **YANG, Cheng**
**Yangzhou City, Jiangsu 211400 (CN)**
• **HU, Xueping**
**Yangzhou City, Jiangsu 211400 (CN)**
• **YANG, Yishuang**
**Yangzhou City, Jiangsu 211400 (CN)**
• **YANG, Qingheng**
**Yangzhou City, Jiangsu 211400 (CN)**

(74) Representative: **Ripamonti, Enrico et al**
**Giambrocono & C. S.p.A.,**
**Via Rosolino Pilo, 19/B**
**20129 Milano (IT)**

(54) **POSITIVE ELECTRODE SHEET, PREPARATION METHOD THEREFOR, AND SODIUM-ION BATTERY**

(57)     The present disclosure relates to the field of battery technology, and particularly, to a positive plate and a preparation method thereof, and a sodium-ion battery. The positive plate includes a current collector and at least one cathode material layer provided on at least one side surface of the current collector. The at least one cathode material layer includes a layered transition metal oxide and a polyanionic compound. A mass ratio of the layered transition metal oxide to the polyanionic compound is

$$(\sqrt{2}+1)\rho_1/\rho_2 \sim 4(\sqrt{2}+1)\rho_1/\rho_2$$, wherein $\rho_1$ indicates a true density of the layered transition metal oxide, $\rho_2$ indicates a true density of the polyanionic compound, and $1.25 \leq \rho_1/\rho_2 \leq 1.86$. A particle size distribution of the layered transition metal oxide satisfies:

$$(\sqrt{3}-\sqrt{2})D_{50} \leq D_{10} \leq (\sqrt{2}-1)D_{50}$$, and a particle size of the polyanionic compound satisfies:

$$D'_{50} \leq \frac{(\sqrt{2}-1)}{4}D_{50}$$. The positive plate of the present disclosure may have effectively improved air stability, and also higher compaction density and excellent electrochemical performance.

EP 4 407 706 A1

0.5C rate discharge curve

FIG. 1

**Description**

**CROSS-REFERENCE TO RELEVANT APPLICATIONS**

The present disclosure claims the priority of the Chinese patent application filed with the China National Intellectual Property Administration on November 29th, 2022 with the application number 202211514774.7, entitled "POSITIVE PLATE AND PREPARATION METHOD THEREOF AND SODIUM-ION BATTERY", the content of which is incorporated herein in its entirety by reference.

**TECHNICAL FIELD**

The present disclosure relates to the technical field of battery technology, and particularly, to a positive plate and a preparation method thereof and a sodium-ion battery.

**BACKGROUND ART**

With the widespread application of lithium-ion batteries in the field of electric vehicles, the demand for lithium resources has greatly increased. However, the reserve of lithium in the Earth's crust only accounts for 0.0017%, and there is still no effective lithium resource recovery technology, which obviously cannot meet the growing needs in fields such as large-scale energy storage and electric vehicles. Therefore, from the perspective of sustainable development and utilization of energy, it is very important to seek a new rechargeable battery system with low cost, high safety, and long cycle life. The reserve of sodium in the Earth's crust accounts for about 2.36% (mass fraction), which is much higher than that of lithium, and sodium is widely distributed and low in cost. At the same time, sodium and lithium belong to the same main group element, and both exhibit similar "rocking chair" electrochemical charge and discharge behaviors in battery work. Therefore, the development of high-performance and low-cost sodium-ion battery technology is of great significance for the sustainable development of fields such as large-scale energy storage and electric vehicles.

At present, the most promising cathode materials of sodium-ion batteries mainly include layered transition metal oxides and polyanionic compounds. Among them, the layered transition metal oxides exhibit higher capacity per gram and meet the needs of high energy density, however, have poor air stability, and are easy to undergo ion exchange reactions with hydrogen ions of water molecules in the air, and generate alkaline oxides such as $Na_2CO_3$, $NaHCO_3$, and NaOH on the surface of the material and directly absorb water molecules as interlayer crystallization water, which may change the crystal structure of the material and reduce the crystallinity of the material. The formation of a strongly alkaline environment on the surface of the material will cause the bonding agent to be defluorinated and fail, and the alkali will corrode the current collector aluminum foil with amphoteric metal characteristics, which will seriously affect the performance of the battery. At present, the commonly used solution in the industry is to make the layered transition metal oxides of the material into micron-sized polycrystalline or monocrystalline particles, which are supplementarily subjected to doping or coating improvement, which however cannot effectively improve the air stability of the material. Polyanionic compounds have attracted much attention due to their stable skeleton structure, excellent cycle performance, and good air stability, but their poor intrinsic electronic conductivity also poses challenges to the large-scale use of the material. At present, the main improvement methods include nano-crystallization and carbon compounding, which however reduce the volumetric energy density of the material.

In view of this, the present disclosure is hereby proposed.

**SUMMARY**

An object of the present disclosure is to provide a positive plate, to solve the technical problems of poor air stability and low volumetric energy density of the positive plate in the prior art.

Another object of the present disclosure is to provide a preparation method for the positive plate.

Another object of the present disclosure is to provide the sodium-ion battery.

In order to realize the above-mentioned objects of the present disclosure, the following technical solutions are specially adopted:

a positive plate, including a current collector and at least one cathode material layer provided on at least one side surface of the current collector, wherein the at least one cathode material layer includes a layered transition metal oxide and a polyanionic compound;

a chemical formula of the layered transition metal oxide includes $Na_xMO_2$, wherein $0.6 \leq x \leq 1.0$, and M includes at least one of Fe, Mn, Cr, Ni, Co, Cu, Mg, Zr, and Ti;

a chemical formula of the polyanionic compound includes at least one of $NaAPO_4$, $Na_yE_2(XO_4)_3$, and $Na_2QP_2O_7$,

wherein A includes Fe and/or Mn, $1 \leq y \leq 4$, E includes at least one of V, Fe, Ni, Mn, and Ti, X includes at least one of P, S, and Si, and Q includes at least one of Fe, Mn, and Co;

a mass ratio of the layered transition metal oxide to the polyanionic compound is expressed as

$$\left(\sqrt{2}+1\right)\rho_1/\rho_2 \sim 4\left(\sqrt{2}+1\right)\rho_1/\rho_2$$, wherein $\rho_1$ indicates a true density of the layered transition metal oxide, and $\rho_2$ indicates a true density of the polyanionic compound,

$$1.25 \leq \rho_1/\rho_2 \leq 1.86;$$

a particle size distribution of the layered transition metal oxide satisfies: $\left(\sqrt{3}-\sqrt{2}\right)D_{50} \leq D_{10} \leq \left(\sqrt{2}-1\right)D_{50}$ ; and

a particle size of the polyanionic compound satisfies: $D'_{50} \leq \frac{\left(\sqrt{2}-1\right)}{4}D_{50}$ .

In an embodiment, a range of $\rho_1$ is $4.4\sim4.65 g/cm^3$; and a range of $\rho_2$ is $2.5\sim3.5 g/cm^3$.

In an embodiment, a particle size $D_{50}$ of the layered transition metal oxide is $4\sim12\mu m$.

In an embodiment, a particle size $D_{10}$ of the layered transition metal oxide is $1.27\sim3.82\mu m$.

In an embodiment, a particle size $D'_{50}$ of the polyanionic compound is $0.41\sim1.24\mu m$.

In an embodiment, the at least one cathode material layer further includes a conductive agent and a bonding agent.

In an embodiment, the conductive agent includes at least one of carbon nanotube, conductive carbon black, conductive graphite, graphene, and carbon fiber.

In an embodiment, the bonding agent include polyvinylidene fluoride.

In an embodiment, a total mass of the conductive agent and the bonding agent accounts for no more than 5% of a mass of the at least one cathode material layer.

In an embodiment, in the at least one cathode material layer, a mass ratio of the conductive agent to the bonding agent is (1.5-3.5): (1.5-3.5).

In an embodiment, a compaction density of the positive plate is $3.0\sim3.6 g/cm^3$.

The preparation method of the positive plate includes the following steps:

preparing a cathode slurry, wherein the cathode slurry contains the layered transition metal oxide and the polyanionic compound; and coating the cathode slurry on the at least one side surface of the current collector, and then performing drying and compacting.

In an embodiment, the cathode slurry further contains a conductive agent, a bonding agent, and a solvent.

In an embodiment, a preparation method of the cathode slurry specifically includes:

dissolving the bonding agent into the solvent, adding the conductive agent and mixing them evenly to obtain a conductive slurry; and mixing the conductive slurry, the layered transition metal oxide, and the polyanionic compound evenly, to obtain a cathode slurry.

In an embodiment, a temperature of the drying is 75-120°C.

In an embodiment, a pressure adopted by the compacting is 20-100MPa.

The sodium-ion battery, including the positive plate.

Compared with the prior art, the beneficial effects of the present disclosure are as follows.

(1) In the present disclosure, the positive plate obtained by controlling the particle size relationship, particle size distribution, and mass ratio relationship between the transition metal oxide and the polyanionic compound may have effectively improved air stability, and also higher compaction density and excellent electrochemical performance.

(2) The preparation method of the positive plate of the present disclosure is simple and easy to be operated, that is, coating the cathode slurry containing the layered transition metal oxide and the polyanionic compound on the at least one side surface of the current collector, and then performing drying and compacting.

(3) The sodium-ion battery obtained by the present disclosure has excellent electrochemical performance.

## BRIEF DESCRIPTION OF DRAWINGS

In order to illustrate the technical solutions in the embodiments of the present disclosure or in the prior art more clearly, the drawings that need to be used in the description of the embodiments or the prior art are briefly introduced as follows. Obviously, the drawings in the following description show some embodiments of the present disclosure. For those skilled in the art, other drawings can also be obtained according to these drawings without making any creative efforts.

FIG. 1 is a discharge curve diagram of a cell in Example 1 of the present disclosure; and
FIG. 2 is a curve diagram of a cycle retention rate of a cell in Example 3 of the present disclosure.

## DETAILED DESCRIPTION OF EMBODIMENTS

Embodiments of the present disclosure will be described in detail below in conjunction with examples, but those skilled in the art will understand that the following examples are only used to illustrate the present disclosure, and should not be considered as limiting the scope of the present disclosure. Those whose specific conditions are not indicated in the examples are carried out according to the conventional conditions or the conditions suggested by the manufacturers. The used reagents or instruments of which the manufacturers are not indicated are all commercially available conventional products.

A positive plate includes a current collector and at least one cathode material layer provided on at least one side surface of the current collector; the at least one cathode material layer includes a layered transition metal oxide and a polyanionic compound.

A chemical formula of the layered transition metal oxide includes $Na_xMO_2$, wherein $0.6{\leq}x{\leq}1.0$, and M includes at least one of Fe, Mn, Cr, Ni, Co, Cu, Mg, Zr, and Ti.

A chemical formula of the polyanionic compound includes at least one of $NaAPO_4$, $Na_yE_2(XO_4)_3$, and $Na_2QP_2O_7$, wherein A includes Fe and/or Mn, $1{\leq}y{\leq}4$, E includes at least one of V, Fe, Ni, Mn, and Ti, X includes at least one of P, S, and Si, and Q includes at least one of Fe, Mn, and Co.

A mass ratio of the layered transition metal oxide to the polyanionic compound is expressed as

$$\left(\sqrt{2}+1\right)\rho_1/\rho_2 \sim 4\left(\sqrt{2}+1\right)\rho_1/\rho_2$$ , wherein $\rho_1$ indicates a true density of the layered transition metal oxide, and $\rho_2$ indicates a true density of the polyanionic compound,

$$1.25{\leq}\rho_1/\rho_2{\leq}1.86.$$

A particle size distribution of the layered transition metal oxide satisfies: $\left(\sqrt{3}-\sqrt{2}\right)D_{50}{\leq}D_{10}{\leq}\left(\sqrt{2}-1\right)D_{50}$ .

A particle size of the polyanionic compound satisfies: $D'_{50}{\leq}\frac{(\sqrt{2}-1)}{4}D_{50}$ .

In the present disclosure, the positive plate obtained by controlling the particle size relationship, particle size distribution, and mass ratio relationship between the transition metal oxide and the polyanionic compound may have not only effectively improved air stability, but also higher compaction density and excellent electrochemical performance.

The true density refers to the actual mass of solid matter per unit volume of the material in an absolutely compact state, that is, the density after removing the internal pores or the voids between particles. The determination method refers to GB/T 24586-2009.

When the layered transition metal oxide is selected from a plurality of oxides, $\rho_1$ indicates the average value of true densities of a plurality of the layered transition metal oxides. The polyanionic compound is selected from a plurality of oxides, $\rho_2$ indicates the average value of true densities of a plurality of the polyanionic compounds.

The mechanism of the present disclosure includes: it is assumed that all particles are spherical particles, and the spherical particles are arranged in a way of sphere stacking, where second-level particles are filled between first-level particles, third-level particles are filled between the first-level particles and the second-level particles, and so forth, the porosity of the first-level particles is -38%, the porosity of the second-level particles is -15%, the porosity of the third-level particles is -5%, and the porosity of fourth-level particles is -2%, and when the distribution of particles of different sizes reaches the third level, filling with smaller particles may not greatly reduce the porosity and increase the volume density of the particles. Therefore, the present disclosure is based on the accumulation of three-level particles, wherein the filling and accumulation are performed with $D_{50}$ of the transition metal oxide as the first-level particles and $D_{10}$ thereof as the second-level particles, and $D_{50}$ of the polyanionic compound as the third-level particles, and the sizes of the second-level particles and the third-level particles are calculated according to the size of the first-level particles, respectively. Through the coordination of the first three levels of particles ($D_{50}$ of the transition metal oxide, $D_{10}$ of the transition

metal oxide, and $D_{50}$ of the polyanionic compound), the density of accumulation (corresponding to the compaction density/volume density of the electrode plate) may be effectively increased.

When the sizes of the particles of individual level are obtained, in order to improve the air sensitivity of the layered transition metal oxide, it at least needs to make the polyanionic compound in the electrode plate evenly distributed on the outer layer of the layered oxide, to block the contact between the layered transition metal oxide and air. Assuming that all particles are spheres, $D_{50}$ of the transition metal oxide and $D_{50}$ of the polyanionic compound are regarded as the average particle sizes, the surface area of the spherical particles of the corresponding metal oxide may be obtained by calculation. In order to ensure the desired effect (the polyanionic compound coats the transition metal oxide in the middle), the polyanionic compound is further assumed to be circular, and the sum of all circular areas is not less than the surface area of the layered oxide, therefore, according to the areas of the transition metal oxide and the polyanionic compound, the relationship between the number of particles of the transition metal oxide and the number of particles of the polyanionic compound may be further obtained, and by combining the particle sizes, the numbers of particles, and the true densities of the transition metal oxide and the polyanionic compound, the final mass relationship between the two materials may be obtained.

Therefore, through the control of parameters such as particle distribution and mass ratio, it may not only increase the compaction density, but also reduce the air sensitivity of the material. While the compaction density is increased, the pores are reduced to a certain extent, and contact between the metal oxide and air is reduced. The metal oxide has high capacity and poor circulation, while the polyanionic compound has low capacity and good circulation, the metal oxide, as the main body, is compounded with a part of the polyanionic compound, to improve cycle performance while ensuring high capacity.

In an embodiment, the particle size of the polyanionic compound satisfies: $D'_{50} \leq \frac{(\sqrt{2}-1)}{4} D_{50}$.

In an embodiment, x includes but is not limited to 0.6, 0.7, 0.8, 0.9 or 1.0. The chemical formula of the layered transition metal oxide includes $NaNi_{1/3}Fe_{1/3}Mn_{1/3}O_2$, $NaNi_{1/3}Fe_{1/3}Mg_{1/3}O_2$, $NaNi_{1/5}Fe_{2/5}Mn_{2/5}O_2$, $NaNi_{1/3}Fe_{1/3}Ti_{1/3}O_2$, $NaNi_{3/9}Fe_{3/9}Mn_{2/9}Zr_{1/9}O_2$, $Na_{0.9}Cu_{0.25}Fe_{0.3}Mn_{0.45}O_2$, $Na_{2/3}Ni_{1/3}Mn_{5/6}Ti_{1/6}O_2$, $Na_{0.75}MnO_2$, $Na_{2/3}Mn_{2/3}Ni_{1/3}O_2$, $Na_{2/3}Mn_{5/9}Ni_{3/9}Cr_{1/9}O_2$, or $NaNi_{1/5}Fe_{1/5}Cu_{1/5}Mn_{2/5}O_2$, and so forth.

In an embodiment, the polyanionic compound $NaAPO_4$ is $NaFePO_4$, or $NaMnPO_4$. In an embodiment, in $Na_yE_2(XO_4)_3$, y includes but is not limited to 1, 2, 3, and 4, and $Na_yE_2(XO_4)_3$ may be $NaV_2(PO_4)_3$, $NaFe_2(PO_4)_3$, $NaNi_2(PO_4)_3$, $NaTi_2(PO_4)_3$, $NaV_2(SO_4)_3$, or $NaV_2(SiO_4)_3$, and so forth. In an embodiment, $Na_2QP_2O_7$ is $Na_2FeP_2O_7$, $Na_2MnP_2O_7$, or $Na_2CoP_2O_7$.

In an embodiment, the range of $\rho_1$ is 4.4~4.65g/cm³, such as 4.5g/cm³, 4.52g/cm³, or 4.6g/cm³, and so forth. The range of $\rho_2$ is 2.5~3.5g/cm³, such as 2.64g/cm³, 2.72g/cm³, 2.8g/cm³, 3g/cm³ or 3.2g/cm³, and so forth.

In an embodiment, the value of $\rho_1/\rho_2$ includes but is not limited to 1.3, 1.4, 1.46, 1.5, 1.52, 1.6, or 1.8, and so forth.

In an embodiment, the particle size $D_{50}$ of the layered transition metal oxide is 4~12μm, such as 5.03μm, 6.87μm, 7.4μm, 8μm, 9μm, or 10μm, and so forth.

In an embodiment, the particle size $D_{10}$ of the layered transition metal oxide is 1.27~3.82μm, such as 1.3μm, 1.52μm, 1.83μm, 2.44μm, 2.5μm, 2.8μm, 3μm, 3.15μm, 3.5μm, 3.76μm, and so forth.

In an embodiment, the particle size $D'_{50}$ of the polyanionic compound is 0.41~1.24μm, such as 0.44μm, 0.51μm, 0.62μm, 0.7μm, 0.9μm, 1μm, or 1.2μm, and so forth.

In an embodiment, the cathode material layer further includes a conductive agent and a bonding agent.

In an embodiment, the conductive agent includes at least one of carbon nanotube (CNT), conductive carbon black (SP), conductive graphite, graphene, and carbon fiber. In an embodiment, the conductive agent includes conductive carbon black and carbon nanotube, and the mass ratio of conductive carbon black to carbon nanotube is (1-3):0.5, such as 1:0.5, 1.5:0.5, 2:0.5, 2.5:0.5, and 2.8:0.5, and so forth.

In an embodiment, the bonding agent includes at least one of polyvinylidene fluoride (PVDF), polytetrafluoroethylene, polyacrylic acid, polyacrylonitrile, styrene-butadiene rubber, and polyimide.

In an embodiment, the total mass of the conductive agent and the bonding agent accounts for no more than 5% of the mass of the at least one cathode material layer, such as 0.5%, 0.8%, 1%, 1.5%, 2%, 3%, 4%, 4.8%, and so forth. In an embodiment, the ratio of the total mass of the conductive agent and the bonding agent to the mass of the cathode material layer is 1%-4.8%.

In an embodiment, in the cathode material layer, the mass ratio of the conductive agent to the bonding agent is (1.5-3.5): (1.5-3.5), such as 1.5:3.5, 2:3, 3.5:1.5, and so forth.

In an embodiment, the compaction density of the positive plate is 3.0~3.6g/cm³, such as 3.1g/cm³, 3.2g/cm³, 3.3g/cm³, 3.4g/cm³, 3.5g/cm³, and so forth.

According to another aspect of the present disclosure, the present disclosure further relates to a preparation method of the positive plate, including the following steps:
preparing a cathode slurry, wherein the cathode slurry contains the layered transition metal oxide and the polyanionic compound; and coating the cathode slurry on the at least one side surface of the current collector, and then performing drying and compacting.

The preparation method of the positive plate of the present disclosure is simple and easy to be operated, i.e., coating the cathode slurry containing the layered transition metal oxide and the polyanionic compound on the at least one side surface of the current collector, and then performing drying and compacting.

In an embodiment, the current collector in the present disclosure includes aluminum foil or composite aluminum foil.

In an embodiment, the cathode slurry further includes the conductive agent, the bonding agent, and solvent. In an embodiment, the solvent includes N-methyl pyrrolidone (NMP).

The preparation method of the cathode slurry specifically includes: dissolving the bonding agent into the solvent, adding the conductive agent and dispersing them evenly to obtain a uniform conductive slurry; and then adding the layered transition metal oxide and the polyanionic compound into the conductive slurry, and dispersing them evenly to obtain the cathode slurry.

In an embodiment, a temperature of the drying is 75-120°C. In an embodiment, a temperature of the drying is 80°C, 90°C, 95°C, 100°C, 110°C or 115°C, and so forth.

In an embodiment, a pressure adopted by the compacting is 20-100MPa. In an embodiment, a pressure adopted by the compacting is 30MPa, 40MPa, 50MPa, 60MPa, 70MPa, 80MPa, 90MPa, 95MPa, and so forth.

According to another aspect of the present disclosure, the present disclosure also relates to a sodium-ion battery, including the positive plate. The sodium-ion battery of the present disclosure has excellent electrochemical performance.

Further explanations and illustrations are given blow in conjunction with specific embodiments, and comparative examples.

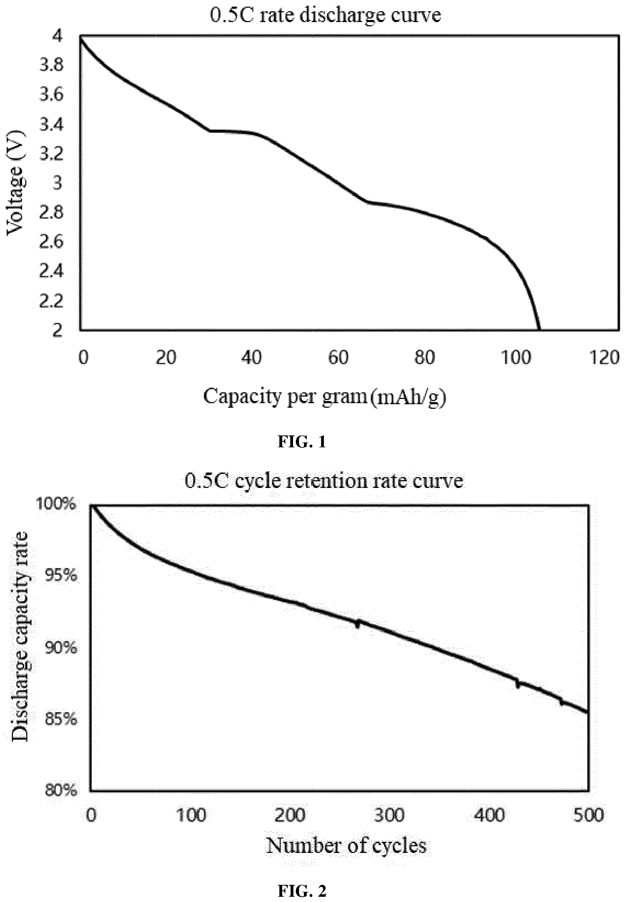

A discharge curve diagram of a cell in Example 1 of the present disclosure is shown in FIG. 1.

A curve diagram of a cycle retention rate of a cell in Example 3 of the present disclosure is shown in FIG. 2.

**Example 1**

A preparation method of a positive plate included the following steps:

(a) dissolving 2.0 parts by mass of PVDF in NMP solvent, then adding 2.0 parts by mass of SP and 0.5 parts by mass of CNT as conductive agents, and dispersing them evenly to obtain a conductive slurry S1;

(b) adding cathode materials, 75.5 parts by mass of layered transition metal oxide $NaNi_{1/3}Fe_{1/3}Mn_{1/3}O_2$ and 20.0 parts by mass of polyanionic compound $Na_3V_2(PO_4)_3$, to the first conductive slurry of step (a), wherein in the cathode material $NaNi_{1/3}Fe_{1/3}Mn_{1/3}O_2$, $D_{10}=2.44\mu m$, $D_{50}=6.87\mu m$, and the true density was $4.50g/cm^3$, and in the cathode material $Na_3V_2(PO_4)_3$, $D_{50}=0.51\mu m$, and the true density was $3.24g/cm^3$, and dispersing them evenly to obtain a slurry S2; and

(c) coating the above-mentioned slurry S2 on the aluminum foil evenly, and bake-drying and rolling the same to obtain the positive plate.

The positive plate of the present example, negative plate, separator, electrolyte, and so forth were assembled to form a battery, which was subjected to processes such as maturing, formation, and aging to obtain a cell to be tested.

**Example 2**

The preparation method of the positive plate was the same as in Example 1, except that the layered transition metal oxide was 88 parts by mass and the polyanionic compound was 7.5 parts by mass.

**Example 3**

The preparation method of the positive plate was the same as in Example 1, except that the layered transition metal oxide was $Na_{0.9}Cu_{0.25}Fe_{0.3}Mn_{0.45}O_2$, with particle size $D_{10}=1.83\mu m$, particle size $D_{50}=5.03\mu m$, and the true density of $4.55 g/cm^3$.

**Example 4**

The preparation method of the positive plate was the same as in Example 1, except that the polyanionic compound was $NaFePO_4$, with particle size $D_{50}=0.44\mu m$, and the true density of $3.14g/cm^3$.

**Example 5**

The preparation method of the positive plate was the same as in Example 1, except that the layered transition metal oxide contained $NaNi_{1/3}Fe_{1/3}Mn_{1/3}O_2$ and $Na_{0.9}Cu_{0.25}Fe_{0.3}Mn_{0.45}O_2$ with a mass ratio of 1:1, the polyanionic compound contained $NaFePO_4$, $Na_3V_2(PO_4)_3$, and $Na_2MnP_2O_7$ with a mass ratio of 1:1:1, and the true density of $Na_2MnP_2O_7$ was $3.26g/cm^3$.

**Comparative Example 1**

A preparation method of a positive plate included the following steps:

(a) dissolving 2.0 parts of PVDF in NMP solvent, then adding 2.0 parts of SP and 0.5 parts of CNT as the conductive agent, and dispersing them evenly to obtain a conductive slurry S1;
(b) adding the cathode material 95.5 parts of layered transition metal oxide $NaNi_{1/3}Fe_{1/3}Mn_{1/3}O_2$ into the S1, wherein in the cathode material of $NaNi_{1/3}Fe_{1/3}Mn_{1/3}O_2$, $D_{10}=2.44\mu m$, $D_{50}=6.87\mu m$, and dispersing them evenly to obtain a slurry S2; and
(c) coating the above-mentioned slurry S2 on the aluminum foil evenly, and bake-drying and rolling the same to obtain the positive plate.

The positive plate of the present comparative example, negative plate, separator, electrolyte, and so forth were assembled to obtain a battery, which was subjected to processes such as maturing, formation, and aging, to obtain a cell to be tested.

**Comparative Example 2**

A preparation method of a positive plate included the following steps:

(a) dissolving 2.0 parts of PVDF in NMP solvent, then adding 2.0 parts of SP and 0.5 parts of CNT as the conductive agent, and dispersing them evenly to obtain a conductive slurry S1;
(b) adding the cathode material 95.5 parts of polyanionic compound $Na_3V_2(PO_4)_3$ into the S1, wherein in the cathode material of $Na_3V_2(PO_4)_3$, $D_{50}=0.51\mu m$, and dispersing them evenly to obtain a slurry S2; and
(c) coating the above-mentioned slurry S2 on the aluminum foil evenly, and bake-drying and rolling the same to obtain the positive plate.

The positive plate of the present comparative example, negative plate, separator, electrolyte, and so forth were assembled to obtain a battery, which was subjected to processes such as maturing, formation, and aging, to obtain a cell to be tested.

**Comparative Example 3**

The preparation method of the positive plate was the same as in Example 1, except that in the layered transition metal oxide, the particle size $D_{10}=2.8\mu m$, the particle size $D_{50}=15\mu m$, and the true density was $4.49g/cm^3$, and in the polyanionic compound, the particle size $D_{50}=1.65\mu m$, and the true density was $3.25g/cm^3$.

**Experimental Example**

Electrochemical performance test was performed on the positive plates and the sodium-ion batteries in the examples and the comparative examples by the following method.

**I. Residual alkali test**

The positive plate was placed in an environment with a humidity of $26\pm3\%$ for 12 hours, and then the powder on the electrode plate was separated from the aluminum foil, and transferred to a beaker, followed with adding deionized water, stirring for 60 seconds, filtering, transferring the filtrate to a sample table of the potentiometric titrator, and performing potentiometric titration with hydrochloric acid. The carbonate and bicarbonate obtained in the test were converted into sodium-ion content, wherein the content calculation basis was the mass of the layered transition metal oxide in the cathode powder after separated from the aluminum foil.

## II. Capacity test

It was charged to 4.0V and a cut-off current 0.05C, with a constant current and constant voltage at a rate of 0.5C, followed by standing for 30 minutes, then being discharged to 2.0V with a constant current at a rate of 0.5C. The battery capacity was recorded and converted into a gram capacity according to the mass of the active material in the positive plate, with the gram capacity recorded as a reversible capacity.

## III. Cycle performance test

At 45±2°C, it was charged to 4.0V and a cut-off current 0.05C, with a constant current and constant voltage at a rate of 0.5C, followed by standing for 30 minutes, then being discharged to 2.0V with a constant current at a rate of 0.5C, standing for 30 minutes, and cycling/repeating the process for 500 times. The ratio of the 500th capacity to the initial capacity was recorded as the capacity retention rate.

The test results are shown in Table 1.

Table 1 Performance test results

| Group | Residual alkali test after buffering (ppm) | Electrode plate compaction density (g/cm$^3$) | Reversible capacity (mAh/g) | Retention rate after cycling for 500 times (%) |
|---|---|---|---|---|
| Example 1 | 587 | 3.60 | 103.1 | 84.6 |
| Example 2 | 498 | 3.55 | 104.4 | 83.2 |
| Example 3 | 451 | 3.42 | 103.4 | 85.4 |
| Example 4 | 504 | 3.35 | 101.0 | 83.4 |
| Example 5 | 599 | 3.47 | 102.8 | 82.9 |
| Comparative Example 1 | 6540 | 2.82 | 106.6 | 62.4 |
| Comparative Example 2 | 259 | 2.16 | 92.4 | 86.1 |
| Comparative Example 3 | 3518 | 2.95 | 101.5 | 69.4 |

It may be seen from Table 1 that in each example of the present disclosure, the layered transition metal oxide with large particle size and the polyanionic compound with small particle size are filled with each other, wherein the polyanionic compound, regarded as the main part, and the conductive agent and the bonding agent, regarded as the auxiliary part, are evenly dispersed on the surface of the layered transition metal oxide, which on the one hand enables the positive plate to have a higher compaction density, to effectively increase the energy density of the battery, and on the other hand, enables the combined positive plate has both better air stability and cycle performance.

Compared with Embodiment 1, the active material of Comparative Example 1 only adopts the layered transition metal oxide, and the obtained positive plate has low compaction density and poor retention rate after cycling for 500 times.

Compared with Embodiment 1, the active material of Comparative Example 2 only adopts the polyanionic compound, and the obtained positive plate has low compaction density and low reversible capacity.

Compared with Embodiment 1, the particle size distribution of the active material in Comparative Example 3 is not within the protection scope of the present disclosure, and the obtained positive plate has low compaction density and poor cycle retention rate.

Finally, it should be noted that the above embodiments are merely used for illustrating the technical solutions of the present disclosure, rather than limiting the present disclosure. Although the detailed description is made to the present disclosure with reference to the preceding embodiments, those ordinarily skilled in the art should understand that they still may make modifications for the technical solutions recited in the preceding embodiments, or make equivalent substitutions to some or all of the technical features therein, and these modifications or substitutions do not make the essence of the corresponding technical solutions depart from the scope of the technical solutions of embodiments of the present disclosure.

Claims

1.  A positive plate, comprising a current collector and at least one cathode material layer provided on at least one side surface of the current collector, wherein the at least one cathode material layer comprises a layered transition metal oxide and a polyanionic compound;

    a chemical formula of the layered transition metal oxide comprises $Na_xMO_2$, wherein $0.6 \leq x \leq 1.0$, and M comprises at least one selected from the group consisting of Fe, Mn, Cr, Ni, Co, Cu, Mg, Zr, and Ti;
    a chemical formula of the polyanionic compound comprises at least one selected from the group consisting of $NaAPO_4$, $Na_yE_2(XO_4)_3$, and $Na_2QP_2O_7$, wherein A comprises Fe and/or Mn, $1 \leq y \leq 4$, E comprises at least one selected from the group consisting of V, Fe, Ni, Mn, and Ti, X comprises at least one selected from the group consisting of P, S, and Si, and Q comprises at least one selected from the group consisting of Fe, Mn, and Co;
    a mass ratio of the layered transition metal oxide to the polyanionic compound is

    $$(\sqrt{2} + 1)\rho_1/\rho_2 \sim 4(\sqrt{2} + 1)\rho_1/\rho_2$$, wherein $\rho_1$ indicates a true density of the layered transition metal oxide, $\rho_2$ indicates a true density of the polyanionic compound, and $1.25 \leq \rho_1/\rho_2 \leq 1.86$;

    a particle size distribution of the layered transition metal oxide satisfies: $(\sqrt{3} - \sqrt{2})D_{50} \leq D_{10} \leq (\sqrt{2} - 1)D_{50}$; and

    a particle size of the polyanionic compound satisfies: $D'_{50} \leq \frac{(\sqrt{2}-1)}{4}D_{50}$.

2.  The positive plate according to claim 1, wherein a range of $\rho_1$ is $4.4 \sim 4.65 g/cm^3$; and a range of $\rho_2$ is $2.5 \sim 3.5 g/cm^3$.

3.  The positive plate according to claim 1, wherein at least one of following features (1) to (3) are comprised:

    (1) a particle size $D_{50}$ of the layered transition metal oxide is $4 \sim 12 \mu m$;
    (2) a particle size $D_{10}$ of the layered transition metal oxide is $1.27 \sim 3.82 \mu m$; and
    (3) a particle size $D'_{50}$ of the polyanionic compound is $0.41 \sim 1.24 \mu m$.

4.  The positive plate according to claim 1, wherein at least one of following features (1) to (5) are comprised:

    (1) the at least one cathode material layer further comprises a conductive agent and a bonding agent;
    (2) the conductive agent comprises at least one selected from the group consisting of carbon nanotube, conductive carbon black, conductive graphite, graphene, and carbon fiber;
    (3) the bonding agent comprises at least one selected from the group consisting of polyvinylidene fluoride, polytetrafluoroethylene, polyacrylic acid, polyacrylonitrile, styrene-butadiene rubber, and polyimide;
    (4) a total mass of the conductive agent and the bonding agent accounts for no more than 5% of a mass of the at least one cathode material layer; and
    (5) in the at least one cathode material layer, a mass ratio of the conductive agent to the bonding agent is (1.5-3.5): (1.5-3.5).

5.  The positive plate according to claim 1, wherein a compaction density of the positive plate is $3.0 \sim 3.6 g/cm^3$.

6.  A preparation method of the positive plate according to any one of claims 1 to 5, comprising following steps:
    preparing a cathode slurry, wherein the cathode slurry contains the layered transition metal oxide and the polyanionic compound; and coating the cathode slurry on the at least one side surface of the current collector, and then performing drying and compacting.

7.  The preparation method of the positive plate according to claim 6, wherein the cathode slurry further contains a conductive agent, a bonding agent, and a solvent.

8.  The preparation method of the positive plate according to claim 7, wherein a preparation method of the cathode slurry specifically comprises:
    dissolving the bonding agent into the solvent, adding the conductive agent and mixing them evenly to obtain a conductive slurry; and mixing the conductive slurry, the layered transition metal oxide, and the polyanionic compound evenly, to obtain the cathode slurry.

9. The preparation method of the positive plate according to claim 6, wherein at least one of the following features (1) to (2) are comprised:

    (1) a temperature of the drying is 75~120°C; and
    (2) a pressure adopted by the compacting is 20-100MPa.

10. A sodium-ion battery, comprising the positive plate according to any one of claims 1 to 5.

**FIG. 1**

**FIG. 2**

# INTERNATIONAL SEARCH REPORT

| International application No. |
|---|
| **PCT/CN2022/138078** |

**A. CLASSIFICATION OF SUBJECT MATTER**

H01M4/131(2010.01)i; H01M4/136(2010.01)i; H01M4/505(2010.01)i; H01M4/525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: NaFeO2, NaMnO2, NaNi1/3Fe1/3Mn1/3O2, 钠, 电池, 正极, D50, D10, 过渡金属氧化物, 聚阴离子, 真密度, 重量, 质量, 比, sodium, battery, positive, transition, metal, oxide, polyanion, true, density, weight, mass, ratio+

**C. DOCUMENTS CONSIDERED TO BE RELEVANT**

| Category* | Citation of document, with indication, where appropriate, of the relevant passages | Relevant to claim No. |
|---|---|---|
| A | CN 115132987 A (SUNGROW POWER SUPPLY CO., LTD.) 30 September 2022 (2022-09-30)<br>      description, paragraphs 4-70 | 1-10 |
| A | CN 113871565 A (YADEA TECHNOLOGY GROUP CO., LTD.) 31 December 2021 (2021-12-31)<br>      entire document | 1-10 |
| A | CN 111799470 A (NINGDE CONTEMPORARY AMPEREX TECHNOLOGY CO., LTD.) 20 October 2020 (2020-10-20)<br>      entire document | 1-10 |
| A | CN 115172671 A (SHANGHAI JIAO TONG UNIVERSITY) 11 October 2022 (2022-10-11)<br>      entire document | 1-10 |
| A | US 2021202946 A1 (SOOCHOW UNIVERSITY) 01 July 2021 (2021-07-01)<br>      entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 June 2023** | **12 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/138078**

| Patent document cited in search report | | | Publication date (day/month/year) | Patent family member(s) | | | Publication date (day/month/year) |
|---|---|---|---|---|---|---|---|
| CN | 115132987 | A | 30 September 2022 | None | | | |
| CN | 113871565 | A | 31 December 2021 | None | | | |
| CN | 111799470 | A | 20 October 2020 | None | | | |
| CN | 115172671 | A | 11 October 2022 | None | | | |
| US | 2021202946 | A1 | 01 July 2021 | WO | 2021114401 | A1 | 17 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211514774
- GB 245862009 T